Europäisches Patentamt

European Patent Office

Office européen des brevets

(19)

(11) Publication number: **0 209 872**

**A2**

(12)

# EUROPEAN PATENT APPLICATION

(21) Application number: **86109950.5**

(22) Date of filing: **19.07.86**

(51) Int. Cl.⁴: **G 01 N 29/02**
//G01F23/28

(30) Priority: **22.07.85 US 757572**

(43) Date of publication of application:
**28.01.87 Bulletin 87/5**

(84) Designated Contracting States:
**AT BE CH DE FR GB IT LI LU NL SE**

(71) Applicant: **E.I. DU PONT DE NEMOURS AND COMPANY**
**1007 Market Street**
**Wilmington Delaware 19898(US)**

(72) Inventor: **Staunton, Harold Francis**
**R.D. No.2 Box 332A**
**Avondale New Jersey 19311(US)**

(72) Inventor: **Chow, Allan Tit-Shing Chow**
**109 Danbury Drive**
**Wilmington Delaware 19803(US)**

(72) Inventor: **Kohli, Chhaya Kulkarni**
**2602 Northgate Road**
**Wilmington Delaware 19810(US)**

(74) Representative: **von Kreisler, Alek, Dipl.-Chem. et al,**
**Deichmannhaus am Hauptbahnhof**
**D-5000 Köln 1(DE)**

(54) **Method and apparatus for ultrasonic interface detection.**

(57) An unloaded ultrasonic horn assembly is driven at its resonant frequency. As the horn encounters an interface and becomes loaded a feedback signal representative of this fact is generated. An output signal responsive to the loss of the feedback signal provides an indication of the encountering of the interface.

*Fig. 6*

1

IP-0555

## METHOD AND APPARATUS FOR ULTRASONIC INTERFACE DETECTION

### Field of the Invention

The present invention relates to an arrangement for detecting a solid or liquid interface using an ultrasonic horn.

Description of the Prior Art

Techniques are known in the art whereby ultrasonic energy is utilized to dissolve tableted material. Exemplary of such prior knowledge is United States Patent 3,582,285 (Hamilton) which discloses a package for tableted chemicals. Ultrasonic energy is applied from the exterior of the package and coupled into a reaction compartment such that a tablet of material disposed within the compartment is dissolved. The patent's disclosure recognizes that the application of ultrasonic energy results in the creation of relatively high sonic energy zones within the compartment. However, experience has shown that a tableted material tends to migrate and the fragments produced by sonic dissolution tend to disperse within the compartment from the high energy zone to zones of relatively less energy. As a result relatively long periods of exposure to ultrasonic energy may be required to completely dissolve the material of the tablet.

Such prolonged exposure may result in excess heating of the body of liquid in which the tablet is disposed. This excessive heating may be especially deleterious when the tableted material is being dissolved within a body of liquid (e.g., a sample and/or reagent) that is used for the analysis of biological liquids. Accordingly, it would be advantageous to provide a container arrangement whereby tableted or partially emulsified material may be dissolved expeditiously (i.e., in less than one minute) by the application of ultrasonic energy from a point in the interior of the container. Further, it is believed advantageous to provide a container which exhibits a structure which confines the tableted or partially emulsified material to a relatively high energy zone thereby preventing the migration of the material, tablet or portions of the tablet from this zone, thus decreasing the dissolution time.

When storing a liquid reagent and/or specimen care must be exercised to minimize evaporation. Simultaneously, however, whatever structure is used to inhibit evaporation must be compatible with the requirements of access to the liquid during use. Accordingly it is believed advantageous to provide a lid structure which is resealable to permit extended storage without evaporation and, simultaneously to accommodate mixing or sampling probes. Lid structures which realize these goals are available in the art. Exemplary of such devices is that disclosed in United States Patent 3,994,594 (Sandrock et al.). However, such lid structures are believed incompatible for use in an environment in which the mixing and/or sampling probe is other than a sharp implement. Moreover, in multi-compartmented containers it is believed desirable to provide a lid structure which minimizes vapor transmission from compartment to compartment, thus minimizing contamination of the contents of one compartment by the contents of another compartment.

The source of sonic energy used for dissolving tableted material is a device known as an ultrasonic horn. The horn is a relatively elongated member which vibrates at an ultrasonic frequency as a result of a conversion of an electrical excitation signal into a mechanical vibration. Ultrasonic horns may be provided with a bore through which a liquid may be flowed through the horn and out of the tip. This structure allows injection of one liquid into another, as in emulsion formulation, misting or fogging. Such ultrasonic horns are produced by, among others, Heat Systems - Ultrasonics Inc., Farmingdale, New York.

4

Other horn structures are known which operate as atomizers by pumping a liquid from a reservoir by the pumping action generated as a result of an asymmetric sound field forming bubbles in the bore. Exemplary of this type of device is that shown in the Article by Lierke, "Ultrasonic Atomizer Incorporating A Self-Acting Liquid Supply", 5 Ultrasonics, 214 (1967).

However, when using a flow-through horn in a biological testing environment care must be taken to prevent "carry-over", i.e., contamination of a subsequent liquid with particulate matter deposited within the horn by a preceding liquid. It would therefore be advantageous to provide an ultrasonic horn assembly having a self-cleaning capability such that the carry-over of particulate matter is minimized or eliminated.

SUMMARY OF THE INVENTION

This invention relates to a method and apparatus for ultrasonically detecting a solid or liquid interface. A predetermined voltage sufficient to vibrate an unloaded ultrasonic horn is applied to the horn. A feedback signal representative of the loading of the horn is generated upon the encountering an interface by the horn. An output signal responsive to the feedback signal is generated and provides an indication that an interface has been encountered by the horn.

## BRIEF DESCRIPTION OF THE DRAWINGS

The invention may be more fully understood from the following detailed description thereof taken in connection with the accompanying drawings which form a part of this application and in which:

Figure 1 is a plan view of multi-container strip useful for carrying a liquid for biological testing in which each container has a compartment with a tablet-receiving recess defined by a plurality of projections formed therewithin;

Figure 2 is a side elevational view taken along section lines 2-2 of Figure 1;

Figures 3A through 3D are each plan views of an individual container illustrating alternate embodiments of the tablet-receiving recess defined by projections in accordance with the present invention;

Figure 4 is a plan view of a resealable lid structure usable with a multi-compartment container of Figure 1;

Figure 5 is a sectional view of the lid structure taken along lines 5-5 of Figure 4; and

Figure 6 is a side sectional view of an ultrasonic horn in accordance with the present invention.

## DETAILED DESCRIPTION OF THE INVENTION

Throughout the following detailed description similar reference numbers refer to similar elements in all figures of the drawings.

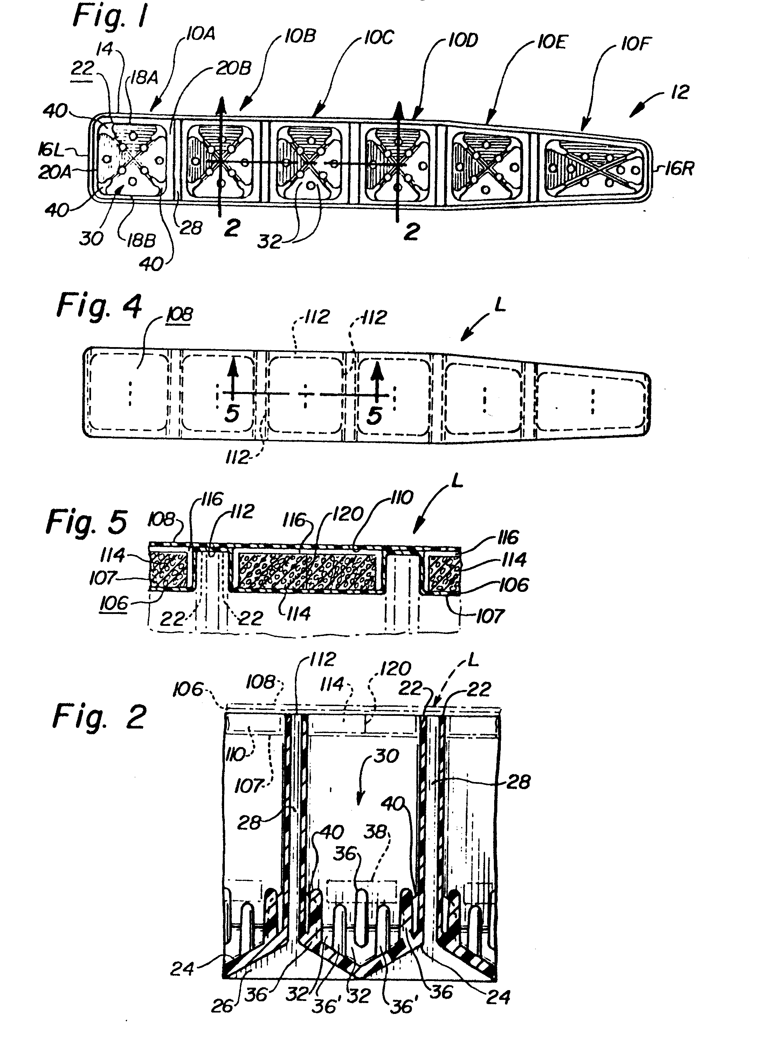

Referring to Figure 1 shown is a plurality of hydration containers 10A through 10F conveniently arranged in an end-to-end relationship to form a container strip generally indicated by the reference character 12. As will be developed more fully herein each of the containers 10A through 10F is provided with an array of the preferred form of sonication-improving projections generally indicated by reference character 30 provided in accordance with the present invention.

The container strip 12 may be fabricated in any convenient manner. In the embodiment shown in Figure 1 the container strip 12 includes a rigid peripheral band 14 formed of a suitable material, such as an inert plastic. The band 14 is either joined to or formed integrally with each of the containers 10 such that, in the preferred case, the container strip 12 generally tapers in a substantially elongated wedge-like manner from a first edge 16L toward a second edge 16R. This wedge-shaped plan profile for the container strip 12 facilitates the mounting of a plurality of such strips in a circumferentially adjacent, generally radially extending relationship across a rotatable reagent carrying plate such as that disclosed in the analysis instrument disclosed and claimed in copending application titled Analysis Instrument Having Heat-Formed Analysis Cuvettes, Serial No. 642,814, filed August 21, 1984 (IP-0473) and assigned to the assignee of the present invention. It should, however, be appreciated that the individual containers 10 may take any predetermined configuration and the containers 10 may be used alone or arranged together in any convenient number and in any convenient manner and remain within the contemplation of this invention.

Each of the containers 10, whether arranged singularly or in a container strip 12, in the embodiment shown, is formed of a suitable inert plastic material and includes a compartment defined by generally opposed pairs of generally parallel and integrally formed sidewalls 18A, 18B and end walls 20A, 20B. The upper surfaces of the sidewalls 18A and 18B and endwalls 20A and 20B (together with the upper surface of the band 14 in the vicinity thereof) register to define a substantially planar sealing surface 22 peripherally surrounding the open upper end of the container 10. The compartment of the container 10 is closed by a downwardly sloping inverted pyramidal floor 24 (Figure 2). In the embodiment shown in Figure 1 the sidewalls 18A, 18B of each container 10 are joined to the peripheral band 14. Further, the endwall 20A of the container 10A and the endwall 20B of the container 10F are likewise connected to the band 14. The band 14 extends slightly below the lower ends of the containers 10 and thus define a support strut 26 whereby the container strip 12 may be set on a suitable work surface. It the container 10 were used singly any convenient arrangement may be used to support the container on a work surface. As seen in Figure 1 the containers 10A, 10B, 10C and 10D are arranged in a substantially square configuration while the containers 10E and 10F are configured in a more rectangular configuration. However, it is to be understood that individual containers may be defined to be other than rectangular or square in plan and be provided with other than a downwardly sloping floor 24 and yet remain within the contemplation of the present invention.

Adjacent ·endwalls 20A, 20B of adjacent containers 10 (e.g., the containers 10B, 10C and 10D, Figure 2) are spaced from each other by a predetermined gap 28 to enhance the thermal and vapor isolation of each of the containers 10. In accordance with the preferred embodiment of the invention the container strip 12 is formed by injection molding from a polyallomer material. Of course, other manufacturing techniques and materials of construction may be utilized and remain within the contemplation of the present invention.

As noted earlier, in accordance with the present invention each of the containers 10 carries an array of mutually spaced sonication improving projections 30. The individual projections 30 are spaced from each other to define channels 32 therebetween. With reference to Figures 1 and 2 the preferred embodiment of the projections 30 is shown. In this embodiment the projections 30 take the form of a set of substantially finger-like members 36, 36' extending vertically upwardly in axially parallel relationship from the floor 24 of each container 10. Selected ones 36 of the finger-like members project upwardly from the floor 24 for a distance greater than the others 36' of the members of the set. Such a relationship thereby defines a tablet-receiving recess 38 disposed generally centrally within the container 10. The spaces between the finger-like members 36, 36' define channels 32 which, as will be explained herein, permit hydrating liquid flow into and through the recess 38. It should be appreciated that the sonication improving projections 30 may be disposed in any convenient orientation or at any convenient location within the container 10. For example, if the finger-like members 36, 36' are used to define the projections 30, such members may be inclined with respect to the vertical axis of the container 10 and may be mounted to the sidewalls 18A, 18B and/or the endwalls 20A, 20B in addition to or in place of their mounting on the floor 24. As also seen from Figures 1 and 2 generally planar members 40 extend diagonally outwardly from the corners of the container 10 to assist in guiding of the circulating hydrating liquid. As seen the side surfaces of the planar members 40 lie substantially perpendicularly to the floor 24.

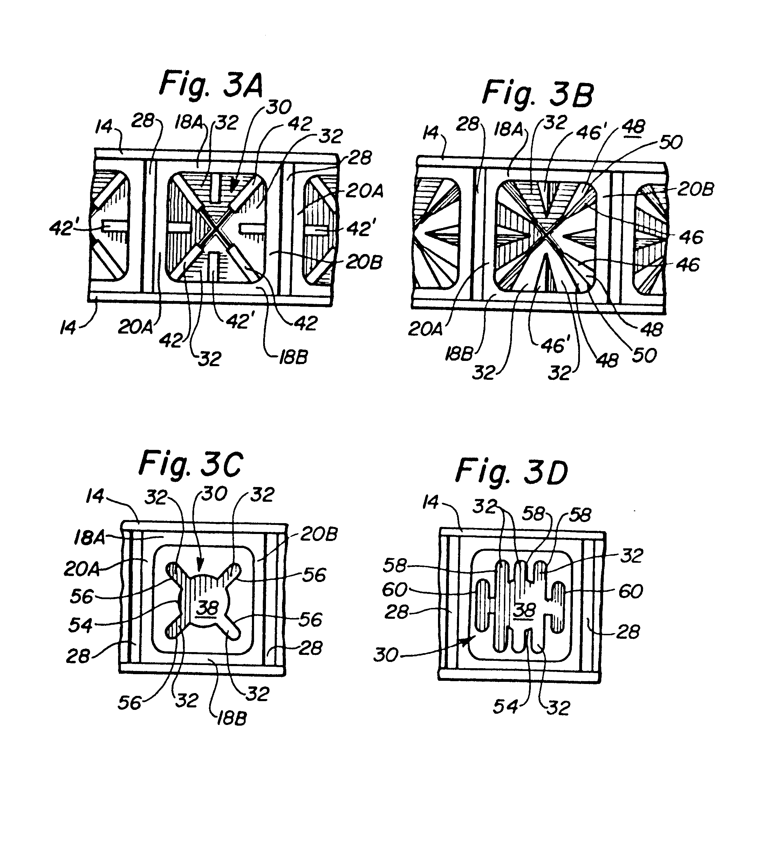

Other embodiments of the sonication improving projections 30 are shown in Figures 3A through 3D. These figures depict plan views of individual containers 10 and illustrate the form and arrangement with vertical side surfaces of alternate embodiments of the sonication improving projections. In Figure 3A the projections 30 are in the form of plate-like members 42 generally similar to the members 40 shown in Figures 1 and 2. Some of the plates 42 extend inwardly from the corners of the container 10 while others 42' extend inwardly from the container from the sidewalls 18 and endwalls 20 thereof. The plates 42, 42' are thus respectively oriented substantially along diagonals and transverses of the container 10. The inner ends of the plates 42, 42' preferably, but not necessarily, extend substantially vertically of the container 10 from the floor 24 of the container. The lower edges of the plates 42, 42' may integrate with the floor 24, if desired. The vertically oriented inner ends of the plates 42, 42' cooperate to define on the interior of the container the centrally located tablet-receiving recess 38. The spaces between the plates 42, 42' define the channels 32 through which hydrated liquid may flow in a manner to be described.

In Figure 3B the projections 30 are in the form of inwardly directed pyramid structures 46, 46'. The pyramidal structures 46, 46' are each defined by faces 48, which are joined along an apex 50 that substantially align in the respective cases of the structures 46 and 46' with the diagonals and transverses of the container 10. The structures 46, 46' are thus mounted in positions analogous to the plates 42, 42' and are thus substantially diagonally and transversely disposed within the container 10. The spaces between the structures 46, 46' define the channels 32 for the purpose to be described.

In Figure 3C the floor 24 of the container 10 is provided with a central circular region 54 which is intersected by diagonal grooves 56 thereby to respectively define the tablet-receiving recess 38 and the channels 32. In this and in Figure 3D the floor 24 is substantially flat. The projections 30 are thus defined as those portions of the material of the container 10 between the grooves 56. Similarly, in Figure 3D the central region 54 again defines the recess 38. In this instance the region 54 is interrupted by a plurality of generally parallel grooves 58 which serve to define the channels 32. End grooves 60 are also provided. The projections 32 are defined as those portions of the material between the grooves 58, 60.

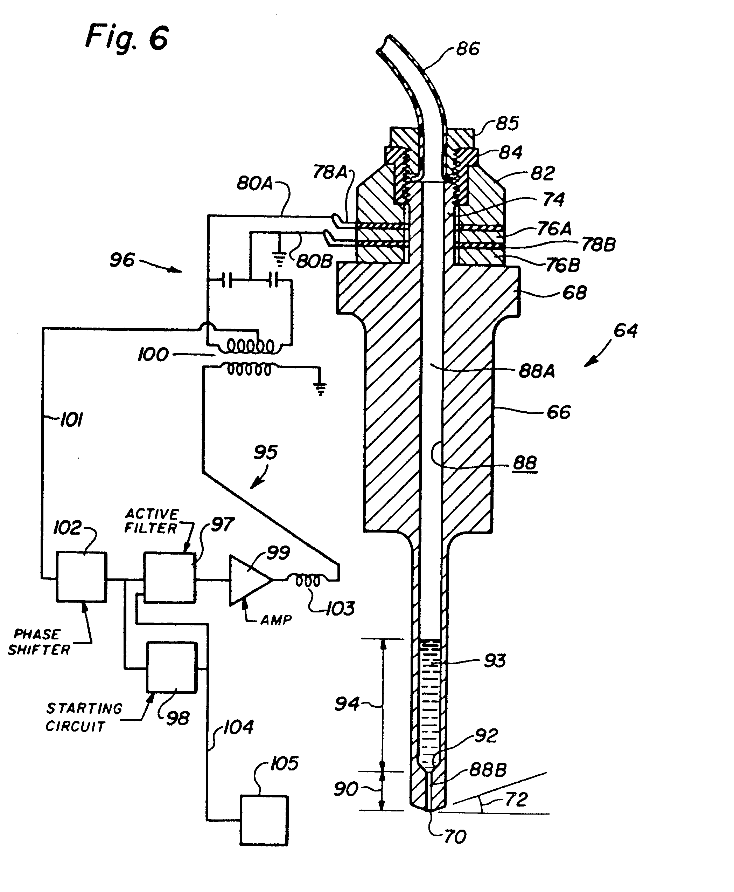

In use a tableted or partially emulsified material to be dissolved is introduced into a hydrating liquid introduced within the container. Sonifying energy is provided from an ultrasonic transducer such as the device (discussed in connection with Figure 6) lowered into the container 10 through the open end thereof. Actuation of the ultrasonic transducer introduces ultrasonic energy and directs the same substantially axially of the container to encompass the tablet-receiving recess 38. The ultrasonic energy may be applied continuously or in bursts, with a relatively constant or varying frequency. The tablet (or plurality of tablets) of material to be dissolved or the partially emulsified material migrates toward and is confined within the tablet receiving recess 38. It is found that the migration of the material to the recess 38 occurs whatever the initial disposition of the material within the container 10. The structural relationship between the projections 30 serves to define a recess 38 which defines a relatively high ultrasonic energy region within the container in which the material to be dissolved is received and confined. Any entrapped air beneath the material to be dissolved and hydrating liquid flow is permitted from other regions on the interior volume of the container through the high energy sonication region and then outwardly through the channels 32 between the projections 30. It is believed that if the embodiment of the projections 30 shown in Figures 1 and 2, i.e., the finger-like members, is used reflection of ultrasonic energy from the walls and floor of the container into the recess 38. As a result of the confinement of the material to the high energy zone relatively high speed dissolution of the material due to the application of ultrasonic energy may be effected. Times of dissolution of the material of less than one minute are possible. Concomitantly heating effects which may deleteriously affect the hydrating liquid and/or the chemical release by dissolution are thereby avoided.

In view of the foregoing those skilled in the art may readily appreciate that the provision of any suitable projections disposed either on the floor and/or from the walls of the container which serve to define both a tablet-receiving recess and recirculating gaps to permit the circulation of hydrating liquid through the high energy zone act in use to enhance the application of ultrasonic energy to efficiently and expeditiously dissolve the tablet material. Any such structural combination which forms the relatively high energy tablet-receiving recess and defines a relatively high ultrasonic energy zone

12

coupled with and communicating recirculating channels lies within the contemplation of the present invention.

-o-O-o-An ultrasonic transducer or probe 64 in accordance with the present invention is shown in Figure 6. The body or horn portion 66 of the transducer 64 is an elongated axial member extending from an enlarged head portion 68 to a beveled tip 70. The tip 70 defines an angle 72 measured with respect to a reference line perpendicular to the axis of the bore within the range from 0° to 45°, more particularly from 30° to 45°, and precisely 30°. An axially projecting threaded boss 74 extends upwardly from the head 68. A pair of piezoelectric crystals 76A, 76B with associated electrodes 78A, 78B are received about the boss 74. Leads 80A, 80B extend from the electrodes 78A, 78B, respectively.

In the embodiment shown in Figure 6 the crystals 76 are held in place against the head 68 by a backpiece 82. A nut 84 threads onto the boss 74 and clamps the assembly together. A tubing connector 85 is threadedly received onto the upper portion of the threads of the nut 84. A tube 86 mounted within the connector 84 may thus be quickly and easily interconnected with the ultrasonic transducer 64.

A bore 88 extends centrally and axially through the transducer 66 where it communicates with the end of the tube 86. The internal diameters of the tube 86 and the upper portion 88A of the bore 88 are substantially equal. As seen in Figure 6 the relatively larger diameter portion 88A extends over substantially all of the length of the transducer 66. Disposed within a predetermined distance 90 of the end of the horn 66 is an inwardly tapering beveled shoulder 92. The presence of the shoulder 92 narrows the bore 88 to a lesser diameter portion 88B. In accordance with the invention the shoulder 92 is located within the predetermined close distance 90 from the antinode (or the tip of the beveled end 66) of the vibrating horn 62.

In operation the tube 86 is connected to suitable aspirating and hydrating sources whereby hydrating liquid may be dispensed from and aspirated into the transducer 64. To minimize the possibility of carry-over of matter in the bore 88 the bore 88 is cleaned by the microstreaming and cavitating action produced by the abutment of the shoulder 92 against a continuous column 93 of liquid extending a predetermined distance 94 into the enlarged portion 88A of the bore.

An ultrasonic horn assembly 64 as shown in Figure 6 is adapted to precisely dispense and aspirate liquid into and from a container 10 and to provide the sonic energy necessary to dissolve a tablet or partially emulsified material. The horn assembly 64 can also be used to mix together at least two liquid materials. Due to the provision of the shoulder 92 the cleaning action generated within the continuous column 94 of liquid is generated which prevents accumulation of matter on the walls of the bore and thus minimizes carryover. It is also believed that the cleaning action extends into liquid within the tube 86, thus minimizing carryover at the interface between the horn and the tube.

The horn assembly 64 may also form a part of an apparatus for detecting the presence of a solid interface (e.g., a lid) or a liquid interface (e.g., the surface of a liquid reagent or a liquid sample.

The leads 80A, 80B are applied to a self resonant power supply network 95 such as that disclosed in United States Patent 4,445,064, which patent is incorporated by reference herein. The network 95 includes a motional bridge circuit 96 for generating feedback signals proportional to the vibration of the ultrasonic horn assembly 64 which is modified by means of an active filter 97 in the feedback circuit which is coupled to a starting circuit 98 that raises the Q of the active filter when a signal is not present in the feedback loop to change the active filter from a mode suppressant to a self-oscillating state.

As seen in Figure 6, the horn assembly 64 is operated in a motional bridge circuit 96 which, in turn, is coupled to the output of constant gain power amplifier 99 via a transformer 100. The motional bridge circuit 96, not only serves to apply excitation power to the horn 64, but more importantly, it produces a sinusoidal feedback control voltage on line 101 that (1) corresponds directly with transducer tip frequency, amplitude and phase and (2) remains independent of nonreactive load changes on the transducer. Line 101 connects the motional bridge circuit 96 to the input of the all pass phase shifter circuit 102. Connected to the output of phase shifter 102 is the active filter circuit 97 and the starting circuit 98 to make filter 97 self oscillating. Active filter 97 is connected to the input of power amplifier 99 whose output is connected to transformer 100 through inductance 103 to drive motional bridge circuit 96.

Feedback control voltage of line 101 is the input to phase shifter circuit 102 which is used to tune the phasing of the input sinusoidal signal in such a predetermined amount and direction that the transducer vibrations are constrained to remain in the parallel resonance condition. It is important to note that only the phasing of the feedback signal, and not amplitude, is adjusted so as to not disturb loop gain and the mode suppression function of succeeding active filter circuit 97. Phase shifter circuit 102 is configured as a first-order all pass network with variable phase shift. Its output is a replica (except for phase) of the input AC feedback signal from motional bridge circuit 96.

Active filter 97 is a dual-purpose second-order Q-controlled band pass filter. The primary purpose of filter 97 is to prevent the power supply from driving the transducer system "out of band" into vibrational modes that have not been selected for use. Used in this way, it is called a mode suppressant filter. The secondary purpose of filter 97 does not appear unless the feedback signal on line 101 is lost completely, such as at startup. In this event, starting circuit 98 which monitors the output signal from phase-shifter circuit 102, causes the Q of active filter circuit 97 to increase to the point where filter circuit 97 brakes into oscillation. (Circuit Q is defined as the ratio of resonant frequency ($W_o$) to -3 dB bandwidth (BW) or

$$Q = \frac{W_o}{BW}$$

The frequency of oscillation is made to be coincident with the preselected natural parallel resonant frequency of the transducer system. The oscillator mode afforded by active filter 97 remains as long as needed to re-establish the feedback control signal on line 101 from motional bridge circuit 96.

16

A voltage (on the order of seventy volts, RMS) is applied to the horn 64 which is sufficient to just drive the unloaded horn 64 to vibrate at its resonant frequency. The horn operates in the frequency range from 20 to 100 kHz., more particularly 40 to 60 kHz, and specifically at 50 kHz. When the tip 70 of the horn 64 encounters the solid or liquid interface the horn becomes loaded and the horn no longer resonates. The signal in the line 101 is thus lost. As described above and in the incorporated patent the loss of the feedback signal causes the starting circuit 98 to produce a signal on the line 104 to a device 105, e.g., a digital computer. Thus is generated an indication that the horn 64 has encountered an interface.

-o-O-o-Each of the containers 10 in the multi-container strip 12 shown in Figure 1 may be closed by a lid structure L in accordance with the present invention. The lid structure includes a first, lower, support sheet 106 having an array of spaced receptacles 107 therein. Each receptacle 107 occupies a perimetric configuration corresponding to the shape of the open end of the container 10 with which it is associated.

A second, upper, cover sheet 108 overlies the lower sheet 106. The sheet 108 is joined to the sheet 106 along those interfacing portions thereof to thus define a substantially enclosed volume 110 within each receptacle 107. The sheets 106 and 108 are joined by any suitable expedient and define a peripheral flange region 112 entirely surrounding the enclosed volume 110. Disposed within each of the volumes 110 is a thermoplastic elastomer pad 112 such as that sold by West Company of Phoenixville, Pennsylvania, under formulation number 8553-3-5-1. The pad 114 is received within each enclosed volume 110 and is sized such that a gap 116 is defined between the walls of the receptacle and the undersurface of the upper sheet 108.

The lid structure L in the above-described assembled relationship is arranged to overlie each container 10 in the strip 12. To facilitate this end the undersurface of the peripheral flange region 112 defined by the jointure of the sheets 106, 108 is heat sealed or otherwise attached to the sealing surface 22 of the compartments 12. In this manner the containers are each closed by an impermeable seal which serves to form an evaporation barrier for the contents of the compartment and to isolate the containers against vapor cross contamination.

Since in the embodiment shown in Figures 4 and 5 lower sheet 106 is to be heat sealed to the surface 22 surrounding each container, the material of the sheet 106 abutting the container 10 must be heat sealable thereto. Otherwise any suitable substantially rigid, inert material may be used as the sheet 106. The sheet 108 is, in the preferred embodiment formed of a laminate of (i) an outer polyester film, such as that sold by E. I. du Pont de Nemours and Company under the trademark MYLAR, (ii) a polyvinylidene chloride coating such as that sold by Dow Chemicals Co. under the trademark SARAN, and (iii) an outer barrier sheet of polyethylene. The polyethylene sheet interfaces against the lower sheet and is joined thereto. Of course, any other suitable materials may be used for the sheets 106 and 108. The top sheet 108 forms a vapor barrier to enhance the shelf life of a container covered by the lid L.

The pad 116 may also be implemented using any stretchable, resealable material, such as silicone rubber or natural rubber. In the preferred embodiment the lid is arranged such that the pad 114 projects downwardly into the container. However, the reverse is also possible, i.e., where pad 114 is disposed above the container. If only a single container is being covered the lid may be implemented using a single sheet with a pad secured thereto. Either surface of the sheet may be attached to the container whereby the pad projects into or lies above the container.

The pad 114 may be provided with a slit 120 which defines an entry and exit path whereby an ultrasonic horn, e.g. the horn 64, may be introduced into the container 10. The elastomeric material of the pad 114 is selected so that the pad self-heals as the horn is withdrawn, thereby maintaining a substantially integral evaporation barrier over the container. The pad 114 self-heals even for relative large diameter probes (i.e., on the order of .125 inches). Thus the lid structure L is useful in conjunction with relatively blunt probes. Moreover, the material of the pad 114 performs a wiping action on the exterior of the horn as the horn is inserted or withdrawn. This wiping action prevents cross contamination. It has been found that the provision of the gap between the pad and the receptacle facilitates the entry of the probe or horn into the container.

Those skilled in the art having the benefit of the teachings of the present invention as hereinabove set forth may effect numerous modifications thereto. These modifications are, however, to be construed as lying within the scope of the present invention as defined by the appended claims.

19

WHAT IS CLAIMED IS:

1. Method for detecting an interface comprising the steps of:

a) applying to an ultrasonic horn a predetermined voltage sufficient to vibrate the unloaded horn at its resonant frequency;

b) generating a first signal representative of the loading of the horn when the same encounters an interface, and

c) generating an output signal in response to the first signal to provide an indication that the interface has been encountered by the horn.

2. Apparatus for detecting an interface comprising the steps of:

means for applying to an ultrasonic horn a predetermined voltage sufficient to vibrate the unloaded horn at its resonant frequency;

means for generating a first signal representative of the loading of the horn when the same encounters an interface, and

means for generating an output signal in response to the first signal to provide an indication that the interface has been encountered by the horn.

Fig. 1

Fig. 4

Fig. 5

Fig. 2

Fig. 3A

Fig. 3B

Fig. 3C

Fig. 3D

Fig. 6